(19) Europäisches Patentamt
European Patent Office
Office européen des brevets

(11) **EP 3 107 067 A1**

(12) **EUROPEAN PATENT APPLICATION**

(43) Date of publication:
**21.12.2016 Bulletin 2016/51**

(51) Int Cl.:
***G06T 7/00*** (2006.01)

(21) Application number: **15305933.2**

(22) Date of filing: **16.06.2015**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(71) Applicant: **Thomson Licensing
92130 Issy-les-Moulineaux (FR)**

(72) Inventors:
• **VANDAME, Benoît**
  **35576 CESSON-SÉVIGNÉ (FR)**
• **SABATER, Neus**
  **35576 CESSON-SÉVIGNÉ (FR)**
• **HOG, Matthieu**
  **35576 CESSON-SÉVIGNÉ (FR)**

(74) Representative: **Browaeys, Jean-Philippe
TECHNICOLOR
1-5, rue Jeanne d'Arc
92130 Issy-les-Moulineaux (FR)**

(54) **METHOD AND APPARATUS FOR COMPUTING AN ESTIMATE POSITION OF A MICRO-IMAGE PRODUCED BY A MICRO-LENS OF AN ARRAY OF MICRO-LENSES OF AN OPTICAL ACQUISITION SYSTEM**

(57) The present invention generally relates to an apparatus and a method for computing an estimate position of a micro-image produced by a micro-lens of an array of micro-lenses of an optical acquisition system in order to calibrate said optical acquisition system. Existing solutions for estimating the position of the micro-image are not designed to be fast and are resource consuming. It is proposed to estimate the position of the micro-image by extracting the parameters $D, \theta, x_{0,0}, y_{0,0}$ defining this position from an image in the Fourier domain. The four parameters $D, \theta, x_{0,0}, y_{0,0}$ characterizing the position of the micro-image relatively to a pixel grid of a sensor of a plenoptic camera are estimated by knowing the accurate position of peaks of a Dirac comb in the image in the Fourier domain.

**Fig. 5**

EP 3 107 067 A1

**Description**

TECHNICAL FIELD

The present disclosure generally relates to an apparatus and a method for computing an estimate position of a micro-image produced by a micro-lens of an array of micro-lenses of an optical acquisition system in order to calibrate said optical acquisition system.

BACKGROUND

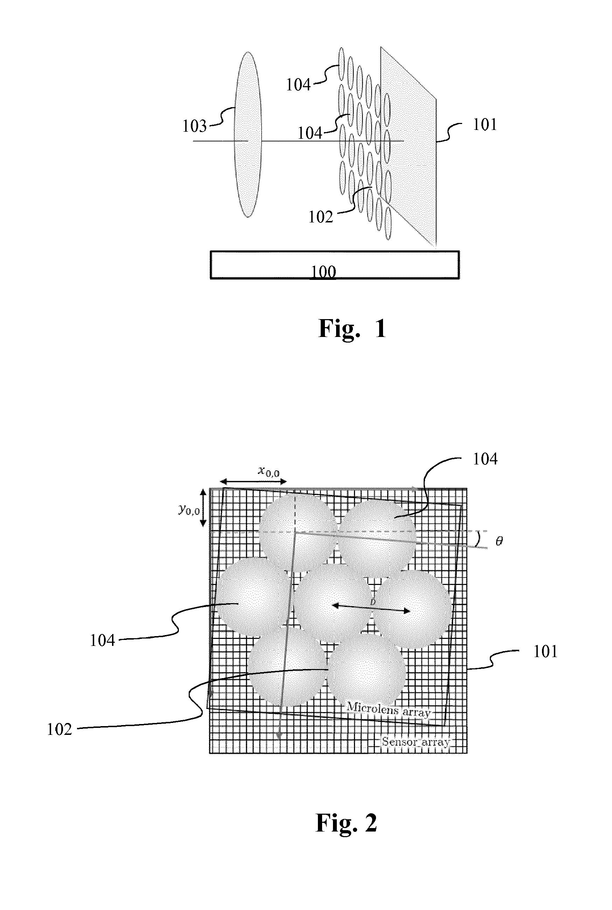

A plenoptic camera 100, as represented on **figure 1**, is able to measure the amount of light traveling along each bundle of rays that intersects a sensor 101, by arranging a microlens array 102 between a main lens 103 and the sensor 101. The micro-lens array 102 comprises a plurality of micro-lenses 104 arranged in a periodic pattern such as an hexagonal pattern or a square pattern.

The data acquired by such a camera 100 are called light-field data. These light-field data can be post-processed to reconstruct images of a scene from different viewpoints. Compared to a conventional camera, the plenoptic camera can obtain additional optical information components for achieving the reconstruction of the images of a scene from the different viewpoints and re-focusing depth by post-processing.

The rendering of light-field data relies on a calibration step. Such a calibration step consists in an estimation of a position of micro-images produces by the micro-lenses 104 of the micro-lens array 102 relatively to the sensor 101. The calibration parameters are then stored as metadata in an output light-field image header file.

Theoretically, the properties of the micro-lens array 102 are provided by the manufacturer of the plenoptic camera. However, slight rotation $\theta$ and shift $(x_{0,0}, y_{0,0})$ of the micro-lens array relatively to the sensor 101 might occur during the manufacturing of the plenoptic camera as shown in **figure 2**. Furthermore, the size of the micro-images is slightly larger than the size of the micro-lenses 104, thus knowing the size of the micro-lenses 104 from the manufacturer does not give a reliable information about the size of the micro-images. This slight gap in the position of the micro-lens array 102 might lead to the generation of blurred re-focussed images. Thus, a calibration step has been commonly added in order to solve this problem.

In "Modeling the calibration pipeline of the Lytro camera for high quality light-field image reconstruction" in Proceedings of the IEEE Computer Society Conference on Computer Vision and Pattern recognition, 2013, pp. 3280-3287, Cho, D. *et al.* propose to use white images, i.e. images of a uniform white scene in order to compute the position of micro-images produced by the micro-lenses 104 of the micro-lens array 102.

A discrete Fourier transform of the white image is obtained and the value of the rotation angle of the micro-lens array 102 is computed in the Fourier domain. The value of the rotation angle is then used to rotate an image of a scene captured by the plenoptic camera 100. The centres of the micro-images produced by the micro-lenses 104 of the micro-lens array 102 are then detected, in the spatial domain, by parabolic fitting and Delaunay triangulation.

Such a method as described by Cho *et al.* is not designed to be fast and is resource consuming. Therefore, this method does not fit for monitoring the position of micro-images dynamically like on a plenoptic video camera or on a plenoptic camera mounted with a zoom or interchangeable lenses.

The present invention has been devised with the foregoing in mind.

SUMMARY OF INVENTION

According to a first aspect of the invention, there is provided an apparatus for computing an estimate position of a micro-image produced by a micro-lens of an array of micro-lenses of an optical acquisition system, said apparatus comprising a processor configured to :

- identify, in a discrete Fourier transform of an image captured by the optical acquisition system, at least one peak of a value of a module of a pixel of the discrete Fourier transform of the captured image,
- determine the position of said peak by adding a shift to a position of the pixel corresponding to the peak, said shift being a function of values of the modules of at least two pixels adjacent to said pixel in the discrete Fourier transform of the captured image,
- compute the estimate position of the micro-image based on the position of the peak in the discrete Fourier transform of the captured image.

According to an embodiment of the invention, an identified peak corresponds to a local maximum of the value of the module of a pixel of the discrete Fourier transform of the captured image.

According to an embodiment of the invention, the processor is configured to identify the peak in the discrete Fourier transform of the captured image by comparing the module of a pixel of the discrete Fourier transform of the captured image with the modules of adjoining pixels in the discrete Fourier transform of the captured image.

According to an embodiment of the invention, the processor is configured to compare the module of said pixel with a threshold prior to comparing the module of said pixel with the modules of adjoining pixels when the module of said pixel is greater than or equal to the threshold.

According to an embodiment of the invention, the processor is configured to compute the shift to be added to the position of the pixel by comparing the modules of at least two pixels adjacent to the pixel corresponding to the peak and calculating a ratio of the module of the adjoining pixel having the smaller value to the sum of the value of the module of the pixel corresponding to the peak with the module of one of the adjoining pixel.

According to an embodiment of the invention, the processor is configured to compute a pitch of the array of micro-lenses based on a polar distance of the peak to a centre of the discrete Fourier transform of the captured image determined based on the position of the peak.

According to an embodiment of the invention, the processor is configured to compute a rotation of the array of micro-lenses in relation to an array of pixels of a sensor of the optical acquisition system based on the polar distance of the peak to the centre of the discrete Fourier transform of the captured image determined based on the position of the peak.

According to an embodiment of the invention, the processor is configured to compute a position of the micro-image produced by a micro-lens of the array of micro-lenses in relation to the array of pixels of the sensor based on the polar distance of the peak to the centre of the discrete Fourier transform of the captured image determined based on the position of the peak and a phase of the peak.

Another aspect of the invention concerns a method for computing an estimate position of a micro-image produced by a micro-lens of an array of micro-lenses of an optical acquisition system, said method comprising :

- identifying, in a discrete Fourier transform of an image captured by the optical acquisition system, at least one peak of a value of a module of a pixel of the discrete Fourier transform of the captured image,
- determining the position of said peak by adding a shift to a position of the pixel corresponding to the peak, said shift being a function of values of the modules of at least two pixels adjacent to said pixel in the discrete Fourier transform of the captured image,
- computing the estimate position of the micro-image based on the position of the peak in the discrete Fourier transform of the captured image.

According to an embodiment of the invention, an identified peak corresponds to a local maximum of the value of the module of a pixel of the discrete Fourier transform of the captured image.

According to an embodiment of the invention, the method further comprises identifying the peak in the discrete Fourier transform of the captured image by comparing the module of a pixel of the discrete Fourier transform of the captured image with the modules of adjoining pixels in the discrete Fourier transform of the captured image.

According to an embodiment of the invention, the method further comprises comparing the module of said pixel with a threshold prior to comparing the module of said pixel with the modules of adjoining pixels when the module of said pixel is greater than or equal to the threshold.

According to an embodiment of the invention, the method further comprises computing the shift to be add to the position of the pixel by comparing the modules of at least two pixels adjacent to the pixel corresponding to the peak and calculating a ratio of the module of the adjoining pixel having the smaller value to the sum of the value of the module of the pixel corresponding to the peak with the module of one of the adjoining pixel.

According to an embodiment of the invention, the method further comprises computing a pitch of the array of micro-lenses based on a polar distance of the peak to a centre of the discrete Fourier transform of the captured image determined based on the position of the peak.

According to an embodiment of the invention, the method further comprises computing a rotation of the array of micro-lenses in relation to an array of pixels of a sensor of the optical acquisition system based on the polar distance of the peak to the centre of the discrete Fourier transform of the captured image determined based on the position of the peak.

According to an embodiment of the invention, the method further comprises computing a position of the micro-image produced by a micro-lens of the array of micro-lenses in relation to the array of pixels of the sensor based on the polar distance of the peak to the centre of the discrete Fourier transform of the captured image determined based on the position of the peak and a phase of the peak.

Some processes implemented by elements of the invention may be computer implemented. Accordingly, such elements may take the form of an entirely hardware embodiment, an entirely software embodiment (including firmware, resident software, micro-code, etc.) or an embodiment combining software and hardware aspects that may all generally be referred to herein as a "circuit", "module" or "system".

Furthermore, such elements may take the form of a computer program product embodied in any tangible medium of expression having computer usable program code embodied in the medium.

Since elements of the present invention can be implemented in software, the present invention can be embodied as computer readable code for provision to a programmable apparatus on any suitable carrier medium. A tangible carrier medium may comprise a storage medium such as a floppy disk, a CD-ROM, a hard disk drive, a magnetic tape device or a solid state memory device and the like. A transient carrier medium may include a signal such as an electrical signal, an electronic signal, an optical signal, an acoustic signal, a magnetic signal or an electromagnetic signal, e.g. a microwave or RF signal.

BRIEF DESCRIPTION OF THE DRAWINGS

Embodiments of the invention will now be described, by way of example only, and with reference to the following drawings in which:

FIG. 1 represents a plenoptic camera as mentioned in prior art;
FIG. 2 represents the slight rotation θ and shift $(x_{0,0}, y_{0,0})$ of a micro-lens array relatively to a sensor that might occur during the manufacturing of a plenoptic camera, as mentioned in the prior art,
FIG. 3 is a schematic block diagram illustrating an example of an apparatus for computing an estimate position of a micro-image produced by a micro-lens of a micro-lens array of a plenoptic camera according to an embodiment of the invention,
FIG. 4 represents a flow chart explaining a process for computing an estimate position of a micro-image produced by a micro-lens of the micro-lens array of a plenoptic camera according to an embodiment of the invention,
FIG. 5 represents the Fourier transform of the image captured by the plenoptic camera,
FIG. 6 represents *N* points located on a unitary circle regularly spaced between the angles [φ, φ + 2πε[,
FIG. 7 represents the *L*/2 cosine functions defined by the *L* first peaks of the Dirac comb in the direct space.

DETAILED DESCRIPTION

As will be appreciated by one skilled in the art, aspects of the present principles can be embodied as a system, method or computer readable medium. Accordingly, aspects of the present principles can take the form of an entirely hardware embodiment, an entirely software embodiment, (including firmware, resident software, micro-code, and so forth) or an embodiment combining software and hardware aspects that can all generally be referred to herein as a "circuit", "module", or "system". Furthermore, aspects of the present principles can take the form of a computer readable storage medium. Any combination of one or more computer readable storage medium(a) may be utilized.

As previously described in relation to figure 1, the micro-lenses 104 of the micro-lens array 102 of an optical acquisition system such as a plenoptic camera 100 are arranged in a periodic pattern such as an hexagonal pattern or a square pattern.

The coordinates $(x_{i,j}, y_{i,j})$ of the center $(i, j)$ of a micro-image in a pixel grid of the sensor 101 are defined as follows in case of a square pattern :

$$\begin{bmatrix} x_i \\ y_i \end{bmatrix} = \begin{bmatrix} x_{0,0} \\ y_{0,0} \end{bmatrix} + D \begin{bmatrix} \cos\theta & -\sin\theta \\ \sin\theta & \cos\theta \end{bmatrix} \begin{bmatrix} i \\ j \end{bmatrix} \quad (1)$$

and in case of an hexagonal pattern :

$$\begin{bmatrix} x_i \\ y_i \end{bmatrix} = \begin{bmatrix} x_{0,0} \\ y_{0,0} \end{bmatrix} + D \begin{bmatrix} 1 & 1/2 \\ 0 & \sqrt{3}/2 \end{bmatrix} \begin{bmatrix} \cos\theta & -\sin\theta \\ \sin\theta & \cos\theta \end{bmatrix} \begin{bmatrix} i \\ j \end{bmatrix} \quad (2)$$

where $(x_{0,0}, u_{0,0})$ are the coordinates of the first micro-lens centre; $(i, j)$ is the micro-image coordinate within the micro-lens array 102; *D* the distance between two contiguous micro-images; and θ the rotation angle between the pixel grid of the sensor 101 and the micro-lens array 102, as shown on figure 2. The four parameters *D*, θ, $x_{0,0}$, $y_{0,0}$ fully characterize the position of the micro-images $(x_i, y_j)$ relatively to pixel grid of the sensor 101.

One way for obtaining the values of these four parameters *D*, θ, $x_{0,0}$, $y_{0,0}$, is to extract them from an image in the Fourier domain. An image in the Fourier domain is a representation of a discrete Fourier transform of an image captured by the plenoptic camera 100.

An image in the Fourier domain is made of $N_u \times N_v$ pixels, hereafter called Fourier pixels to distinguish them from the pixels of the sensor 101 of the plenoptic camera 100. Each Fourier pixel of the image in the Fourier domain has a set of coordinates ($u$; $v$) in a $u$-$v$ coordinate system which enables to locate the Fourier pixel in the image in the Fourier domain.

Since the micro-lenses 104 of the micro-lens array 102 are arranged in a periodic pattern, a discrete Fourier transform of an image captured by the plenoptic camera 100 is a Dirac comb.

The four parameters $D, \theta, x_{0,0}, y_{0,0}$, characterizing the position of the micro-image relatively to the pixel grid of the sensor 101 may be estimated knowing the position of the peaks of the Dirac comb in the image in the Fourier domain.

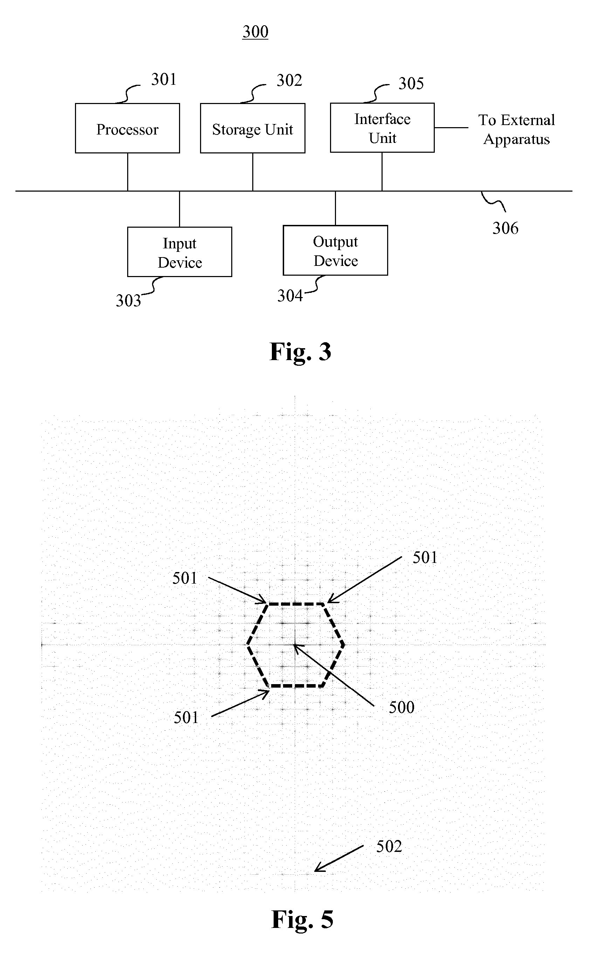

**Figure 3** is a schematic block diagram illustrating an example of an apparatus for computing an estimate position of a micro-image produced by a micro-lens 104 of the micro-lens array 102 of the plenoptic camera 100 according to an embodiment of the present invention.

The apparatus 300 comprises a processor 301, a storage unit 302, an input device 303, a display device 304, and an interface unit 305 which are connected by a bus 306. Of course, constituent elements of the computer apparatus 300 may be connected by a connection other than a bus connection.

The processor 301 controls operations of the apparatus 300. The storage unit 302 stores at least one program to be executed by the processor 301, and various data, including data of 4D light-field images captured or provided by the plenoptic camera 100, parameters used by computations performed by the processor 301, intermediate data of computations performed by the processor 301, and so on. The processor 301 may be formed by any known and suitable hardware, or software, or a combination of hardware and software. For example, the processor 301 may be formed by dedicated hardware such as a processing circuit, or by a programmable processing unit such as a CPU (Central Processing Unit) that executes a program stored in a memory thereof.

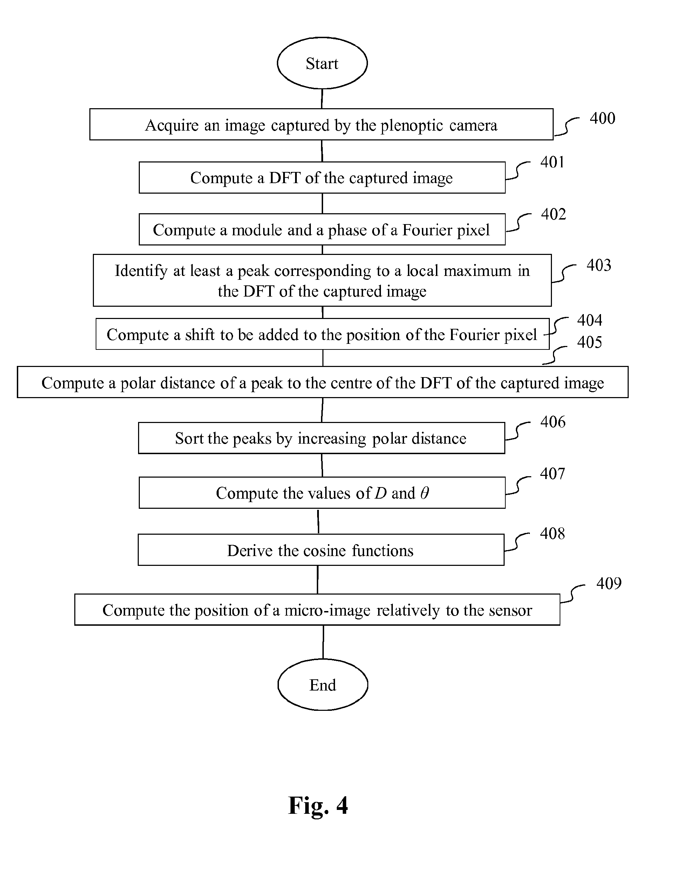

The storage unit 302 may be formed by any suitable storage or means capable of storing the program, data, or the like in a computer-readable manner. Examples of the storage unit 302 include non-transitory computer-readable storage media such as semiconductor memory devices, and magnetic, optical, or magneto-optical recording media loaded into a read and write unit. The program causes the processor 301 to perform a process for computing an estimate position of a micro-image produced by a micro-lens 104 of the array of micro-lenses 102 of the optical acquisition system 100 according to an embodiment of the present invention as described hereinafter with reference to figure 4.

The input device 303 may be formed by a keyboard, a pointing device such as a mouse, or the like for use by the user to input commands. The output device 304 may be formed by a display device to display, for example, a Graphical User Interface (GUI). The input device 303 and the output device 304 may be formed integrally by a touchscreen panel, for example.

The interface unit 305 provides an interface between the apparatus 300 and an external apparatus. The interface unit 305 may be communicable with the external apparatus via cable or wireless communication. In an embodiment, the external apparatus may be a light-field camera 100. In this case, data of 4D light-field images captured by the light-field camera 100 can be input from the light-field camera 100 to the apparatus 300 through the interface unit 305, then stored in the storage unit 302.

In this embodiment the apparatus 300 is exemplary discussed as it is separated from the light-field camera 100 and they are communicable each other via cable or wireless communication, however it should be noted that the apparatus 300 can be integrated with such a light-field camera 100. In this later case, the apparatus 300 may be for example a portable device such as a tablet or a smartphone embedding a light-field camera.

**Figure 4** is a flow chart for explaining a process for computing an estimate position of a micro-image produced by a micro-lens 104 of the micro-lens array 102 of the plenoptic camera 100 according to an embodiment of the present invention.

In a step 400, an image is acquired by the apparatus 300. In an embodiment of the invention, the image is captured by an external apparatus such as the plenoptic camera 100. In this embodiment, the image is input from the plenoptic camera 100 to the apparatus 300 through the interface unit 305 and then stored in the storage unit 302. In another embodiment of the invention, the apparatus 300 embeds the plenoptic camera 100. In this case, the image is captured by the plenoptic camera 100 of the apparatus 300 and then stored in the storage unit 302.

In a step 401, the processor 301 compute a discrete Fourier transform, or DFT, of the image captured by the plenoptic camera 100. The image captured by the plenoptic camera 100 is made of $[N_x, N_y]$ pixels, i.e. the sensor 101 comprises $N_x \times N_y$ pixels. The discrete Fourier transform of the captured image comprises $N_u \times N_v$ pixels called Fourier pixels. For convenience and computation speed $N_u = N_v = 2^p$ such that $N_u \geq \min(N_x, N_y)$.

In a step 402, a module $F_m(u, v)$ and a phase $Fp(u, v)$ of the Fourier pixels ($u$, $v$) with $(u, v) \in [0,N_u[ \times [0,N_v[$ of the discrete Fourier transform of the captured image are computed. The Fourier transform convention is such that $(u,v) = (N_u/2, N_v/2)$ corresponds to the null frequency.

A peak, and its negative counterpart in a discrete Fourier transform of a captured image is the discrete Fourier transform of a cosine function. A first peak in the Fourier domain is always observed with a second peak being symmetric around the image centre and having strictly the same amplitude and phase.

The peaks, displayed with a negative intensity, observed in the discrete module of the Fourier transform of the image captured by the plenoptic camera 100 are shown on **figure 5**. These peaks have three possible origins.

A central peak 500 is located at a position $(u, v) = (N_u/2, N_v/2)$ on the discrete Fourier transform of the captured image. This central peak 500 indicates the energy of the null frequency which corresponds to the average value of the image.

A plurality of symmetrical peaks 501 are located around the centre of the discrete Fourier transform of the captured image These peaks 501 belong to the Dirac comb the properties of which depend on the parameters $D$, $\theta$, $x_{0,0}$, $y_{0,0}$ of the micro-images produced by the micro-lens array 102. The peaks 501 are arranged by group of 4 when the pattern of the micro-lens array 102 is a square pattern or 6 when the pattern of the micro-lens array 102 is a hexagonal pattern within a circle centred on the middle of the discrete Fourier transform of the captured image. Several circles encompass all the peaks 501 each of which corresponding to a harmonic frequency of the smallest circle. The positions of the peaks 501 of the smallest circle in the discrete Fourier transform of the captured image fully characterize the four parameters $D$, $\theta$, $x_{0,0}$, $y_{0,0}$ of the micro-images produced by the micro-lens array 102.

To record colours, the pixels of the sensor 101 are often mounted with a Color Filter Array (CFA) like the Bayer pattern for example. The captured image has not been de-mosaiced prior to computing the discrete Fourier transform, and the Bayer pattern is visible on the discrete Fourier transform of the captured image at the high frequency. The peaks 502 located close to the borders of the discrete Fourier transform of the captured image are discarded because they have no impact on the peaks 501.

In a step 403, the processor 301 identifies, in the discrete Fourier transform of the image captured by the plenoptic camera 100, at least one peak 501. The peak 501 corresponds to a local maximum of a value of the module $F_m(u, v)$ of a Fourier pixel $(u, v)$ of the discrete Fourier transform of the captured image. The processor 301 identifies the peaks 501 in the discrete Fourier transform of the captured image by comparing the module $F_m(u, v)$ of a Fourier pixel $(u, v)$ of the discrete Fourier transform of the captured image with the modules of the eight adjoining Fourier pixels in the discrete Fourier transform of the captured image. In an embodiment of the invention, prior to comparing the modules of the adjoining Fourier pixels with the module $F_m(u, v)$ of the Fourier pixel $(u, v)$, the processor 301 compares the module $F_m(u, v)$ the Fourier pixel $(u, v)$ with a threshold T. This enables the processor 301 to only process Fourier pixels having a module higher than a background noise. If the module $F_m(u, v)$ the Fourier pixel $(u, v)$ is below the threshold T, the processor 301 does not compare the module $F_m(u, v)$ the Fourier pixel $(u, v)$ with the modules of the adjoining Fourier pixels.

When the module $F_m(u, v)$ the Fourier pixel $(u, v)$ is greater or equal to the modules of the adjoining Fourier pixels, then the Fourier pixel $(u, v)$ corresponds to a local maximum. An accurate position of the peak 501 corresponding to the local maximum is given by $(u_n, v_n) = (u + \varepsilon_u, v + \varepsilon_v)$. The parameters $\varepsilon_u$, $\varepsilon_v$ represent the shift to be add to the position $(u, v)$ of the Fourier pixel corresponding the peak 501 and are given by the following equations :

$$
\begin{aligned}
&\text{if } f_m(u-1, v) > f_m(u+1, v) && \epsilon_u = \frac{f_m(u+1, v)}{f_m(u+1, v) + f_m(u, v)} \\
&\text{else} && \epsilon_u = -\frac{f_m(u-1, v)}{f_m(u+1, v) + f_m(u, v)}
\end{aligned} \quad (3)
$$

$$
\begin{aligned}
&\text{if } f_m(u, v-1) > f_m(u, v+1) && \epsilon_v = \frac{f_m(u, v+1)}{f_m(u, v+1) + f_m(u, v)} \\
&\text{else} && \epsilon_v = -\frac{f_m(u, v-1)}{f_m(u, v+1) + f_m(u, v)}
\end{aligned} \quad (4)
$$

In a step 404, the processor 301 computes the shift to be add to the position $(u, v)$ of the Fourier pixel $(u, v)$ by calculating the ratio defined by equations (3) and (4). Using equations (3) and (4), it is possible to estimate the position of a peak 501 with an accuracy of 0.01 pixel.

Indeed, in the Fourier domain, a peak 500, 501, 502 and its negative counterpart is the discrete Fourier transform of a cosine function.

In one dimension, the discrete Fourier transform v(k), where N is the size of the discrete Fourier transform, of a function $f(x)$ is defined by :

$$
v(\text{k}) = \sum_{x=0}^{N-1} f(x) e^{-\frac{2i\pi xk}{N}} \quad (5)
$$

The cosine function of period $\lambda$ can evaluated using the Euler formula :

$$\cos\left(2\pi\frac{x}{\lambda} + \varphi\right) = \frac{1}{2}e^{2i\pi\frac{x}{\lambda}+\varphi i} + \frac{1}{2}e^{-2i\pi\frac{x}{\lambda}-\varphi i} \quad (6)$$

The discrete Fourier transform of the cosine is equal to :

$$v(k) = \sum_{x=0}^{N-1}\frac{1}{2}e^{-\frac{2i\pi x}{N}\left(k+\frac{N}{\lambda}\right)}e^{-\varphi i} + \frac{1}{2}e^{-\frac{2i\pi x}{N}\left(k-\frac{N}{\lambda}\right)}e^{\varphi i} \quad (7)$$

If $N/\lambda = k'$ where $k'$ is an integer, equation (7) becomes:

$$v(k) = \sum_{x=0}^{N-1}\frac{1}{2}e^{-\frac{2i\pi x}{N}(k+k')}e^{-\varphi i} + \frac{1}{2}e^{-\frac{2i\pi x}{N}(k-k')}e^{\varphi i} \quad (8)$$

The term $e^{-\frac{2i\pi x}{N}(k+k')}$ is equal to 1 for $k = -k'$, respectively the term $e^{\frac{2i\pi x}{N}(k-k')}$ is equal to 1 for $k = k'$. $\sum_{x=0}^{N-1}e^{-\frac{2i\pi x}{N}(k+k')}$ is equal to 0 if $k \neq -k'$, which corresponds to the well-known continuous Fourier transform of the cosine function made of two Dirac functions :

$$v(k) = \frac{N}{2}\delta(-k')e^{-\varphi i} + \frac{N}{2}\delta(k')e^{+\varphi i} \quad (9)$$

In norm, $\|v(k')\| = \|v(k)\| = N/2$. The positions of the Dirac function in the Fourier spectra allows deducing the period $\lambda$ with no bias.

If $N/\lambda = k' + \varepsilon$, where $k'$ is an integer number and $\varepsilon \in [0,1[$ is a real number, the discrete Fourier transform becomes much more complex:

$$v(k) = \sum_{x=0}^{N-1}\frac{1}{2}e^{-\frac{2i\pi x}{N}(k+k'+\varepsilon)}e^{-\varphi i} + \frac{1}{2}e^{-\frac{2i\pi x}{N}(k-k'-\varepsilon)}e^{\varphi i} \quad (10)$$

In this case, the discrete Fourier transform of the cosine function is not equal to two Dirac functions located at $\pm k'$ any more. Instead all the $v(k)$ are non-null. Two maxima's are located at $\pm k'$. Thus, $v(\pm k' \pm 1)$ is the second maximal value just after $(\pm k')$ :

$$v(k') = \sum_{x=0}^{N-1}\frac{1}{2}e^{-\frac{2i\pi x}{N}(2k'+\varepsilon)}e^{-\varphi i} + \frac{1}{2}e^{-\frac{2i\pi x}{N}(-\varepsilon)}e^{\varphi i}$$

$$v(k'+1) = \sum_{x=0}^{N-1}\frac{1}{2}e^{-\frac{2i\pi x}{N}(2k'+1+\varepsilon)}e^{-\varphi i} + \frac{1}{2}e^{-\frac{2i\pi x}{N}(1-\varepsilon)}e^{\varphi i} \quad (11)$$

It is interesting to evaluate $\hat{\varepsilon}$ and $\varphi$ only using the values of $v(k')$ and $v(k'+1)$ using the following formula:

$$\varepsilon \approx \hat{\varepsilon} = \frac{\|v(k'+1)\|}{\|v(k'+1)\| + \|v(k')\|} \quad (12)$$

$$\varphi \approx \hat{\varphi} = \arg(v(k')) - \pi\hat{\varepsilon}$$

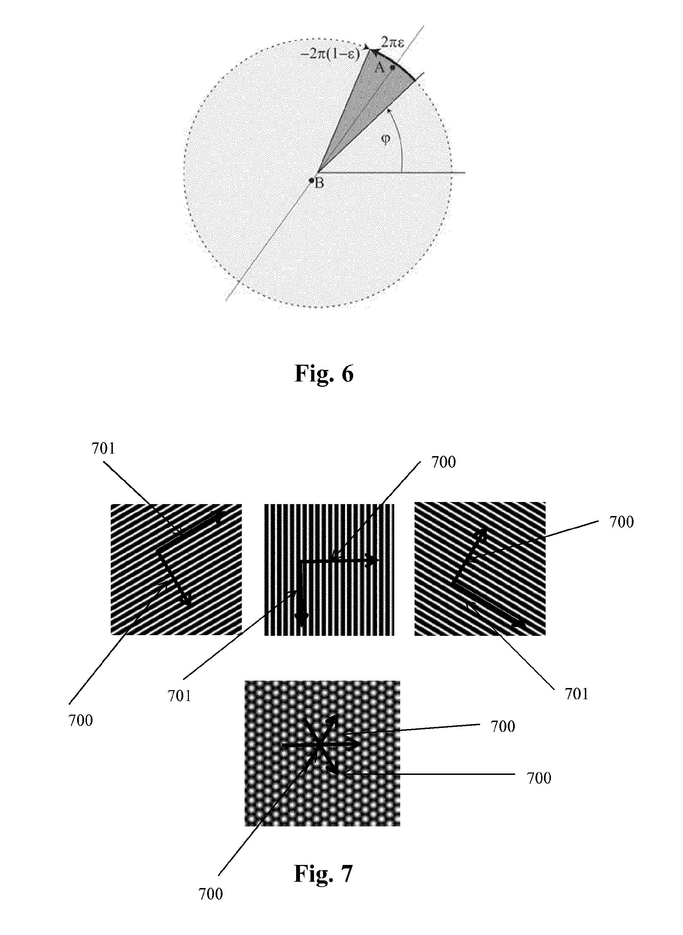

In order to demonstrate equation (12) one considers a geometrical representation of $A = \sum_{x=0}^{N-1} \frac{1}{2} e^{-\frac{2i\pi x}{N}(-\varepsilon)} e^{\varphi i}$. This sum corresponds to $N/2$ times the barycenter of N points located on a unitary circle regularly spaced between the angles [$\varphi$, $\varphi + 2\pi\varepsilon$[ represented on **figure 6**. This sum is almost equal to the centroid of the arc of circle [1]. Thus :

$$\|A\| = \left\|\sum_{x=0}^{N-1} \frac{1}{2} e^{-\frac{2i\pi x}{N}(-\varepsilon)} e^{\varphi i}\right\| = \left\|\frac{N}{2} \frac{\sin(\pi\varepsilon)}{\pi\varepsilon} e^{i(\pi\varepsilon+\varphi)}\right\| = \frac{N}{2} \frac{\sin(\pi\varepsilon)}{\pi\varepsilon} \quad (13)$$

The arc of circle of length $2\pi\varepsilon$ and the arc of circle of length $2\pi(1 - \varepsilon)$ are represented on figure 6. The two points $A$ and $B$ illustrate the centroid of the two arcs of circle respectively the arc of circle of length $2\pi\varepsilon$ and the arc of circle of length $2\pi(1 - \varepsilon)$ which lie on the same line of orientation $\varphi + \pi\varepsilon$.

It is now possible to demonstrate that $\frac{\|B\|}{\|A\|+\|B\|}$ is equal to $\varepsilon$ considering that $\sin(\pi(1 - \varepsilon)) = \sin(\pi\varepsilon)$ :

$$\frac{\|B\|}{\|A\| + \|B\|} = \frac{\frac{N}{2} \frac{\sin(\pi(1-\varepsilon))}{\pi(1-\varepsilon)}}{\frac{N}{2} \frac{\sin(\pi\varepsilon)}{\pi\varepsilon} + \frac{N}{2} \frac{\sin(\pi(1-\varepsilon))}{\pi(1-\varepsilon)}} = \varepsilon \quad (14)$$

Also the phase of $A$ allows computing $\varphi$:

$$\varphi = \arg(A) - \pi\varepsilon \quad (15)$$

To finalize the demonstration, let us demonstrate that $V(k') = r(0) + A$ and $V(k' + 1) = r(1) + B$ where $r(a) = \sum_{x=0}^{N-1} \frac{1}{2} e^{-\frac{2i\pi x}{N}(2k'+a+\varepsilon)} e^{-\varphi i} \approx 0$ is negligible with $a = 0$ or $a = 1$. $r(a)$ is equal to $\frac{N}{2}$ times the barycenter of $N$ points located on the unitary circle between the angles [$-\varphi$, $-\varphi - 4\pi k' - a - \varepsilon$[. The corresponding arc of circle is equal to $2k'$ complete circles plus $a + \varepsilon$ arc of circle. The complete centroid is a barycentre between the circle centre weighted by $2k'$ and the centroid of an arc of circle of length $\pi\varepsilon$ weighted by $\varepsilon$.

$$r(a) \approx \frac{\varepsilon}{2k'} \frac{\sin(\pi\varepsilon)}{\pi\varepsilon} \approx \frac{\sin(\pi\varepsilon)}{2\pi k'} < \frac{1}{2\pi k'} = \frac{1}{2\pi} \frac{\lambda}{N} \quad (16)$$

Thus when computing $\varepsilon$ from $V(k')$ and $V(k' + 1)$ the maximum error is in the order $r$. For a complete study, the term $r$ should be considered with the angle $\varphi$ versus the values $A$ and $B$. experimentations shows that the errors between $\varepsilon$ and its approximation $\hat{\varepsilon}$ depends on $\varphi$. In practice for cosine function with $\lambda \approx 15$ and a discrete Fourier of $N = 1024$ values, the approximation of $\lambda$ is in the order of 1/500 of a pixel.

Back to figure 4, in a step 405, knowing the position $(u_n, v_n) = (u + \varepsilon_u, v + \varepsilon_v)$ of the peak 501, the processor 301 computes the polar distance $(\rho_n, \theta_n)$ of the peak 501 to the centre of the discrete Fourier transform of the captured image:

$$(\rho_n, \theta_n) = \left( \sqrt{\left(u_n - \frac{N_u}{2}\right)^2 + \left(u_n - \frac{N_v}{2}\right)^2}, \mathrm{atan}\left(\left(v_n - \frac{N_v}{2}\right)\Big/\left(u_n - \frac{N_u}{2}\right)\right)\right) \quad (17)$$

The phase $\varphi_n = F_p(u, v) - \pi * (\varepsilon_u + \varepsilon_v)$ of the peak 501 is also computed by the processor 301.

Thus, $N$ Fourier peaks 500, 501 have been extracted by the processor 301, each of them being characterized by the following parameters $\rho_n$, $\theta_n$, $\varphi_n$ with $n \in [0, N[$. The $N$ peaks 500, 501 are then sorted in a list, by the processor 301, by increasing polar distance $\rho_n$ in a step 406. The first peak in the list has a polar distance $\rho_0 = 0$ as it corresponds to the central peak 500. By sorting the peaks by polar distances, it is easy to isolate the peaks 501 which correspond to the first harmonic frequency.

Within the list of sorted Fourier peaks, the $L = 4$ first peaks 501 when the pattern of micro-lens array 102 is a square pattern, or the $L = 6$ first peaks when the pattern of micro-lens array 102 is an hexagonal pattern have the same polar distance $\rho$ within typically $1/N_u$ Fourier pixel.

In a step 407, the processor 301 computes the values of the parameters D and $\theta$ by averaging the $L$ first $\rho_i$ and $\theta_i$ of the $L$ first peaks 501 :

$$D = \frac{L N_u}{\sum_{i=1}^{i=L} \rho_i} \quad (18)$$

$$\theta = \sum_{i=1}^{i=L} mod\left(\theta_i, \frac{2\pi}{L}\right) \quad (19)$$

where $D$ represents the pitch of the array of micro-lenses which corresponds to the distance between three consecutive micro-lens 104 and $\theta$ represents the rotation of the array of micro-lenses 102 in relation to the sensor 101.

In a step 408, the processor 301 derives the $L/2$ cosine functions which are characterized by the parameters $\rho_i$, $\theta_i$, $\varphi_i$ from the $L$ first peaks 501.

The $L$ first peaks 501 define $L/2$ cosine functions. In the direct space, each cosine function defines a corrugated sheet as illustrated in **figure 7**. The sum of this $L/2$ cosine functions defines approximatively the pattern of the micro-lens array 102. Using the phase $\varphi_i$ of the $L$ peaks 501 it is possible for the processor 301 to compute the position of one micro-images $(x_{0,0}, y_{0,0})$ relatively to the sensor 101 of the plenoptic camera 100 in a step 409. The position of one micro-images $(x_{0,0}, y_{0,0})$ relatively to the sensor 101 corresponds to the position in the captured image where the sum of the $L/2$ cosine functions is maximal.

The parameter $\theta_i$, estimated by the processor 301 from the positions of the peaks 501, indicate the orientations of the cosine functions in the captured image as represented by the arrows 700 on figure 7. The intersection of the perpendicular directions $\theta_i + \pi/2$ as represented by the arrows 701 gives the position of the centres of the micro-images produced by the micro-lenses 104.

The position $(x_{0,0}, y_{0,0}$ of the micro-image is estimated as the intersection of 2 arrows 601, and is computed by the processor 301 by using least square estimation.

Let $A = \begin{bmatrix} \sin\left(\theta_1 + \frac{\pi}{2}\right) & -\cos\left(\theta_1 + \frac{\pi}{2}\right) \\ \sin\left(\theta_2 + \frac{\pi}{2}\right) & -\cos\left(\theta_2 + \frac{\pi}{2}\right) \end{bmatrix}$, and $B = \begin{bmatrix} D\varphi_1 \\ D\varphi_2 \end{bmatrix}$ being 2 matrices defined by the two first cosine function parameters. The result of the computation of a least square estimation by the processor 301 gives:

$$\begin{bmatrix} x_{0,0} \\ y_{0,0} \end{bmatrix} = (A^T A)^{-1} A^T B \quad (20)$$

The four parameters $D$, $\theta$, $x_{0,0}$, $y_{0,0}$ are thus fully computed from the position in the discrete Fourier transform of the captured image of the peaks 501.

Although the present invention has been described hereinabove with reference to specific embodiments, the present invention is not limited to the specific embodiments, and modifications will be apparent to a skilled person in the art which lie within the scope of the present invention.

Such a method for computing an estimate position of a micro-image produced by a micro-lens 104 of the array of micro-lenses 102 of the plenoptic camera is robust and does not require the use of a white image in order to obtain the position of the micro-image. Thus, the method according to an embodiment of the invention can be used to monitor the position of the micro-image dynamically, e.g. on a plenoptic video or in the case of a plenoptic camera mounted with a zoom or interchangeable lenses.

Many further modifications and variations will suggest themselves to those versed in the art upon making reference to the foregoing illustrative embodiments, which are given by way of example only and which are not intended to limit the scope of the invention, that being determined solely by the appended claims. In particular the different features from different embodiments may be interchanged, where appropriate.

**Claims**

1. An apparatus for computing an estimate position of a micro-image produced by a micro-lens of an array of micro-lenses of an optical acquisition system, said apparatus comprising a processor configured to:

   - identify, in a discrete Fourier transform of an image captured by the optical acquisition system, at least one peak of a value of a module of a pixel of the discrete Fourier transform of the captured image,
   - determine the position of said peak by adding a shift to a position of the pixel corresponding to the peak, said shift being a function of values of the modules of at least two pixels adjacent to said pixel in the discrete Fourier transform of the captured image,
   - compute the estimate position of the micro-image based on the position of the peak in the discrete Fourier transform of the captured image.

2. The apparatus according to claim 1, wherein an identified peak corresponds to a local maximum of the value of the module of a pixel of the discrete Fourier transform of the captured image.

3. The apparatus according to claim 1 or 2, the processor of which is configured to identify the peak in the discrete Fourier transform of the captured image by comparing the module of a pixel of the discrete Fourier transform of the captured image with the modules of adjoining pixels in the discrete Fourier transform of the captured image.

4. The apparatus according to claim 3, the processor of which is configured to compare the module of said pixel with a threshold prior to comparing the module of said pixel with the modules of adjoining pixels when the module of said pixel is greater than or equal to the threshold.

5. The apparatus according to any of the preceding claims, the processor of which is configured to compute the shift to be added to the position of the pixel by comparing the modules of at least two pixels adjacent to the pixel corresponding to the peak and calculating a ratio of the module of the adjoining pixel having the smaller value to the sum of the value of the module of the pixel corresponding to the peak with the module of one of the adjoining pixel.

6. The apparatus according to any of the preceding claims, the processor of which is configured to compute a pitch of the array of micro-lenses based on a polar distance of the peak to a centre of the discrete Fourier transform of the captured image determined based on the position of the peak.

7. The apparatus according to any of the preceding claims, the processor of which is configured to compute a rotation of the array of micro-lenses in relation to an array of pixels of a sensor of the optical acquisition system based on the polar distance of the peak to the centre of the discrete Fourier transform of the captured image determined based on the position of the peak.

8. The apparatus according to any of the preceding claims, the processor of which is configured to compute a position of the micro-image produced by a micro-lens of the array of micro-lenses in relation to the array of pixels of the sensor based on the polar distance of the peak to the centre of the discrete Fourier transform of the captured image determined based on the position of the peak and a phase of the peak.

9. A method for computing an estimate position of a micro-image produced by a micro-lens of an array of micro-lenses of an optical acquisition system, said method comprising:

- identifying, in a discrete Fourier transform of an image captured by the optical acquisition system, at least one peak of a value of a module of a pixel of the discrete Fourier transform of the captured image,
- determining the position of said peak by adding a shift to a position of the pixel corresponding to the peak, said shift being a function of values of the modules of at least two pixels adjacent to said pixel in the discrete Fourier transform of the captured image,
- computing the estimate position of the micro-image based on the position of the peak in the discrete Fourier transform of the captured image.

10. The method according to claim 9 wherein an identified peak corresponds to a local maximum of the value of the module of a pixel of the discrete Fourier transform of the captured image.

11. The method according to claim 9 or 10, comprising identifying the peak in the discrete Fourier transform of the captured image by comparing the module of a pixel of the discrete Fourier transform of the captured image with the modules of adjoining pixels in the discrete Fourier transform of the captured image.

12. The method according to any claims 9 to 11 comprising computing the shift to be add to the position of the pixel by comparing the modules of at least two pixels adjacent to the pixel corresponding to the peak and calculating a ratio of the module of the adjoining pixel having the smaller value to the sum of the value of the module of the pixel corresponding to the peak with the module of one of the adjoining pixel.

13. A computer program **characterized in that** it comprises program code instructions for the implementation of the method for computing an estimate position of a micro-image produced by a micro-lens of an array of micro-lenses of an optical acquisition system according to any of claims 9 to 12 when the program is executed by a processor.

14. A processor readable medium having stored therein instructions for causing a processor to perform the method for computing an estimate position of a micro-image produced by a micro-lens of an array of micro-lenses of an optical acquisition system according to any of claims 9 to 12.

15. Non-transitory storage medium carrying instructions of program code for executing the method for computing an estimate position of a micro-image produced by a micro-lens of an array of micro-lenses of an optical acquisition system according to any of claims 9 to 12, when said program is executed on a computing device.

104

103

104

102

101

100

**Fig. 1**

$x_{0,0}$

$y_{0,0}$

104

$\theta$

104

$D$

102

101

Microlens array

Sensor array

**Fig. 2**

300

```
┌──────────┐  ┌──────────┐  ┌──────────┐
│ Processor │  │Storage Unit│  │ Interface │──── To External
│          │  │          │  │   Unit   │      Apparatus
└──────────┘  └──────────┘  └──────────┘
  301           302           305
```

```
        ┌──────────┐        ┌──────────┐
        │  Input   │        │  Output  │
        │  Device  │        │  Device  │
        └──────────┘        └──────────┘
          303                 304
```

306

**Fig. 3**

501  501

500

501

502

**Fig. 5**

Start

Acquire an image captured by the plenoptic camera — 400

Compute a DFT of the captured image — 401

Compute a module and a phase of a Fourier pixel — 402

Identify at least a peak corresponding to a local maximum in the DFT of the captured image — 403

Compute a shift to be added to the position of the Fourier pixel — 404
405

Compute a polar distance of a peak to the centre of the DFT of the captured image

Sort the peaks by increasing polar distance — 406

Compute the values of $D$ and $\theta$ — 407

Derive the cosine functions — 408

Compute the position of a micro-image relatively to the sensor — 409

End

# Fig. 4

**Fig. 6**

**Fig. 7**

Europäisches
Patentamt

European
Patent Office

Office européen
des brevets

## EUROPEAN SEARCH REPORT

Application Number

EP 15 30 5933

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FISS JULIET ET AL: "Refocusing plenoptic images using depth-adaptive splatting", 2014 IEEE INTERNATIONAL CONFERENCE ON COMPUTATIONAL PHOTOGRAPHY (ICCP), IEEE, 2 May 2014 (2014-05-02), pages 1-9, XP032605772, DOI: 10.1109/ICCPHOT.2014.6831809 [retrieved on 2014-06-11] | 1-5,9-15 | INV. G06T7/00 |
| Y | * section 2, section 2.1; | 6,7 | |
| A | figure 3 * | 8 | |
|  | ----- | | |
| Y | US 2012/267510 A1 (GROSS ERIK [US] ET AL) 25 October 2012 (2012-10-25) * paragraphs [0092] - [0096] * | 6,7 | |
|  | ----- | | |
| A | US 2014/146184 A1 (MENG LINGFEI [US] ET AL) 29 May 2014 (2014-05-29) * paragraphs [0028], [0043] - [0053] * | 1-15 | |
|  | ----- | | |
| A | US 8 244 058 B1 (INTWALA CHINTAN [US] ET AL) 14 August 2012 (2012-08-14) * columns 6,8 * | 1-15 | TECHNICAL FIELDS SEARCHED (IPC) |
|  | ----- | | G06T H04N |
| A | US 2009/041381 A1 (GEORGIEV TODOR G [US] ET AL) 12 February 2009 (2009-02-12) * paragraphs [0103] - [0105]; figure 8 * | 1-15 | |
|  | ----- | | |

The present search report has been drawn up for all claims

| Place of search | Date of completion of the search | Examiner |
|---|---|---|
| Munich | 30 November 2015 | Krawczyk, Grzegorz |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

& : member of the same patent family, corresponding
  document

EPO FORM 1503 03.82 (P04C01)

## ANNEX TO THE EUROPEAN SEARCH REPORT
## ON EUROPEAN PATENT APPLICATION NO.

EP 15 30 5933

This annex lists the patent family members relating to the patent documents cited in the above-mentioned European search report.
The members are as contained in the European Patent Office EDP file on
The European Patent Office is in no way liable for these particulars which are merely given for the purpose of information.

30-11-2015

| Patent document cited in search report | | Publication date | Patent family member(s) | | Publication date |
|---|---|---|---|---|---|
| US 2012267510 | A1 | 25-10-2012 | AU | 2007226795 A1 | 20-09-2007 |
| | | | CA | 2645670 A1 | 20-09-2007 |
| | | | EP | 1999443 A2 | 10-12-2008 |
| | | | US | 2008073525 A1 | 27-03-2008 |
| | | | US | 2010090090 A1 | 15-04-2010 |
| | | | US | 2012267510 A1 | 25-10-2012 |
| | | | WO | 2007106657 A2 | 20-09-2007 |
| US 2014146184 | A1 | 29-05-2014 | EP | 2736262 A2 | 28-05-2014 |
| | | | JP | 2014106970 A | 09-06-2014 |
| | | | US | 2014146184 A1 | 29-05-2014 |
| US 8244058 | B1 | 14-08-2012 | US | 8244058 B1 | 14-08-2012 |
| | | | US | 2013121615 A1 | 16-05-2013 |
| US 2009041381 | A1 | 12-02-2009 | US | 2009041381 A1 | 12-02-2009 |
| | | | US | 2009041448 A1 | 12-02-2009 |
| | | | US | 2011305447 A1 | 15-12-2011 |
| | | | WO | 2009020977 A1 | 12-02-2009 |

EPO FORM P0459

For more details about this annex : see Official Journal of the European Patent Office, No. 12/82

**REFERENCES CITED IN THE DESCRIPTION**

**Non-patent literature cited in the description**

- **CHO, D.** Modeling the calibration pipeline of the Lytro camera for high quality light-field image reconstruction. *Proceedings of the IEEE Computer Society Conference on Computer Vision and Pattern recognition,* 2013, 3280-3287